# EUROPÄISCHE PATENTSCHRIFT

(11) **EP 0 868 624 B1**
(45) Veröffentlichungstag und Bekanntmachung des Hinweises auf die Patenterteilung: **06.03.2002**
(21) Anmeldenummer: 96946087.2
(22) Anmeldetag: 14.12.1996
(51) Int. Cl.: F16L 23/02

(54) **STOSSVERBINDUNG VON LUFTKANALABSCHNITTEN**
BUTT JOINT OF AIR DUCT SECTIONS
JOINT DROIT POUR SECTIONS DE CONDUITS D'AIR

(30) Priorität: 21.12.1995 DE 19547982
(43) Veröffentlichungstag der Anmeldung: 07.10.1998
(73) Patentinhaber: Metu- System Meinig KG, 78604 Rietheim-Weilheim (DE)
(72) Erfinder: MEINIG, Manfred, D-78604 Rietheim-Weilheim (DE)
(74) Vertreter: Patentanwälte Westphal, Mussgnug & Partner
(86) Internationale Anmeldenummer: DE9602430
(87) Internationale Veröffentlichungsnummer: WO9723743

(56) Entgegenhaltungen:
- EP-A- 0 287 755
- DE-A- 2 553 720
- DE-C- 1 452 890
- GB-A- 1 287 676

## Beschreibung

Die Erfindung betrifft eine Stoßverbindung zwischen zwei Luftkanalabschnitten aus Blech nach dem Oberbegriff des Anspruchs 1.

Runde und flachovale Luftkanäle für Lüftung, Klimatisierung, Absaugungen, Späne- und Fasertransport werden in der Regel aus geraden Luftkanalabschnitten und Formstücken zusammengesetzt. Gerade Kanalabschnitte werden gegenwärtig größtenteils als Wickelfalzrohre, zum kleineren Teil als längsgefalzte Rohre hergestellt. Wickelfalzrohre werden aus einem Blechband gewickelt, dessen Ränder zusammengefalzt werden. Da die Fertigung vollautomatisch und sehr schnell abläuft, sind Wickelfalzrohre sehr preisgünstig. Längsgefalzte Rohre werden meist manuell hergestellt und sind deshalb etwas teurer. Sie werden überwiegend dann eingesetzt, wenn der Wickelfalz aus verschiedenen Gründen stört. Zwischen den geraden Kanalabschnitten werden Formstücke (Bogen, T-Stücke, Abzweigungen, Übergännge und dergl.) verwendet.

Um Kanalabschitte und Formstücke zu einem durchgehenden Luftkanal zu verbinden, gibt es verschiedene Verbindungsarten. Für kleinere Rohrquerschnitte werden sogenannte Steckverbindungen angewendet, während größere Rohrquerschnitte überwiegend durch an den Enden jedes Kanalabschnitts angebrachte Verbindungsflansche verbunden werden. Bei bekannten Stoßverbindungen dieser Art werden die Verbindungsflansche auf die Enden jedes Luftkanalabschnitts aufgebördelt, aufgenietet, punktgeschweißt oder mit Selbstbohrschrauben befestigt. Je nach Bedarf muß die Anlagestelle zwischen Verbindungsflansch und Kanalwand abgedichtet werden. Auch ist eine genaue Zentrierung der aneinanderstoßenden Kanalabschnitte erforderlich.

Die Herstellung dieser bekannten Stoßverbindung ist infolgedessen recht aufwendig. Es müssen ringförmige Verbindungsflansche hergestellt und jeweils am Kanalabschnitt befestigt und abgedichtet sowie zentriert werden. Bei Steckverbindungen ist der Aufwand bei der Herstellung etwas geringer, bei der Montage dafür umso größer. Auch haben die bekannten Luftkanäle erhebliche Mängel hinsichtlich der Abdichtung sowie Störungen der Luftströmung im Kanal durch Vorsprünge und vorstehende Teile im Kanalinneren, auch infolge mangelnder Zentrierung. Insbesondere bei Absaugung und Transport von Staub, Spänen, Fasern und dergleichen führen Blechkanten, Spalte und Vorsprünge im Kanalinneren zu Ablagerungen, welche sich bis zur Verstopfung des Kanals aufbauen können. Bei Transport von Raumluft ist eine solche Ablagerung aus hygienischen Gründen äußerst unerwünscht, da sich in der meist warmen und oft feuchten Umgebung ein idealer Nährboden für Bakterien und Pilze entwickelt. Man hat daher erkannt, daß Luftleitungen für Raumluft unbedingt zu reinigen sind. Für die Erleichterung der Reinigung sind alle Spalte, Rillen, Ansätze und insbesondere vorstehende Teile wie Blechschrauben, Nieten usw. zu vermeiden.

Aus der dem Oberbegriff des Anspruchs 1 zugrundegelegten EP-A1-0 287 755 ist eine Stoßverbindung zwischen zwei Luftkanalabschnitten bekannt, bei der von der Kanalwand einstükkig mit dieser nach außen abstehende Ringborde vorgesehen sind, auf die Verbindungsflansche als getrennte Teile lose aufgesetzt sind, welche jeweils vom äußeren Ende derselben konisch zur angrenzenden Kanalwand zurückweisende Spannschenaufweisen. Die Spannschenkel werden von konischen Seitenschenkeln eines Spannringes zusammengepreßt. Bei diesen bekannten Stoßverbindungen kann nicht ausgeschlossen werden, daß beim Aufsetzen und Festspannen die Verbindungsflansche sich gegen die Ringborde radial versetzen und verziehen. Insbesondere läßt sich eine genaue Zentrierung der Ringborde und somit der aneinander anschließenden Kanalabschnitte nicht gewährleisten. Durch das mehr oder weniger abgerundete Übergehen der Kanalabschnitte in die senkrecht abstehenden Ringborde bilden sich außerdem ringförmige Zwickel an der Kanalinnenwand, welche die glatte Strömung innerhalb des Kanals stören und die zur Staub- und Schmutzansammlung Anlaß geben. Durch die mangelnde Zentrierung wird darüber hinaus eine Vertiefung dieser ringförmigen Zwickel hervorgerufen. Auch die Abdichtung zwischen Ringborden und Verbindungsflanschen gestaltet sich bei den bekannten Stoßverbindungen verhältnismäßig kompliziert, da jeweils nicht nur der Zwischenraum zwischen den aneinanderliegenden Ringflanschen, sondern auch die Zwischenräume zwischen Ringflanschen und Ringborden abgedichtet werden müssen.

Der Erfindung liegt daher die Aufgabe zugrunde, eine Stoßverbindung dieser Art so zu verbessern, daß einerseits die Herstellung und Montage verbilligt und andererseits Dichtheit, glatte Ausbildung im Inneren des Luftkanals, Zentrierung und Stabilität des Luftkanals wesentlich verbessert werden.

Diese Aufgabe wird erfindungsgemäß durch die Merkmale des Anspruchs 1 gelöst.

Durch das Aufsetzen und Festziehen des Spannrings werden die Spannschenkel und damit auch die aneinanderliegenden Ringborde beliebig stark gegeneinandergepreßt. Da die Ringborde scharf abgewinkelt in die Kanalwand übergehen und gleichzeitig gegen die Vertikale vorzugsweise um wenige Grad geneigt sind, ergibt sich eine durchgehende hervorragende Abdichtung der aneinandergepreßten Ringborde. Die Montage des Spannrings ist denkbar einfach und ergibt durch die gleichzeitige Pressung und Zentrierung eine hervorragende Stabilität der Stoßverbindung. Der Spannring kann dabei an seinen aneinanderstoßenden oder sich überlappenden Enden in Umfangsrichtung durch eine im Stand der Technik an sich bekannte Spanneinrichtung, ein Spannschloß oder dergl., in sehr einfacher Weise mit Preßsitz auf die Verbindungsflansche aufmontiert werden. Durch die einstückige Herstellung von Kanalabschnitt und Verbindungsflansch, die Vermeidung von ins Kanalinnere ragenden Teilen des Verbindungsflansches und die im wesentlichen vertiefungsfreie Aneinanderpressung der Ringborde im Bereich der aneinanderstoßenden Kanalwände infolge der einwandfreien Zentrierung ergibt sich eine dichte Luftleitung und ein weitgehend störungsfreier und nicht zur Ansammlung von Verunreinigungen Anlaß gebender Strömungsverlauf im Kanalinneren. Da außer den Kanalabschnitten mit einstückig angeformten Verbindungsflanschen nur ein einziger Spannring gesondert hergestellt und angebracht werden muß, ergeben sich bedeutsame Einsparungen bei Herstellung und Montage.

Die Abdichtung der Stoßverbindungen wird wesentlich vereinfacht. Die Energieverluste und die Geräuschbildung und auch eventuelle Schmutzablagerungen werden wesentlich geringer. Auch die Reinigung eines derartigen Luftkanals wird dadurch erleichtert und verbessert. Grundsätzlich genügt für eine gute Abdichtung bereits das feste Spannen bzw. Zusammenziehen der beiden Ringborde, das bei leichter Neigung der Ringborde im unbelasteten Zustand noch verstärkt wird.

Die Unteransprüche sind auf vorteilhafte Ausgestaltungen der Erfindung gerichtet. Die Ansprüche 2 und 3 beziehen sich auf zweckmäßige Ausbildungen des Verbindungsflansches.

Gemäß Anspruch 4 können zweckmäßigerweise die Kanalwände zur Vermeidung von inneren Fugen im Kanal, wie sie bei einem Wikkelfalzrohr mehr oder weniger unvermeidlich auftreten, durch Anbringen einer einzigen Längsschweißnaht an der Innenseite weitgehend glatt ausgebildet werden. Nach Anspruch 5 ist es aber grundsätzlich auch möglich, den erfindungsgemäßen Verbindungsflansch am Ende eines Wickelfalzrohres anzubringen.

Falls erforderlich, kann gemäß Anspruch 6 der Spalt zwischen den beiden Ringborden in sehr einfacher Weise noch zusätzlich abgedichtet werden.

Anhand der Figuren werden Ausführungsbeispiele der Erfindung näher erläutert. Es zeigen:
- Figur 1: einen axialen Teilschnitt durch eine erfindungsgemäße Stoßverbindung vor dem Festziehen des Spannrings,
- Figur 2: einen der Fig. 1 entsprechenden Teilschnitt nach dem Festziehen des Spannrings,
- Figur 3a: eine Schrägansicht eines kreisrunden Luftkanalabschnitts für die erfindungsgemäße Stoßverbindung,
- Figur 3b: eine Schrägansicht eines als Wickelfalzrohr ausgebildeten kreisrunden Luftkanalabschnitts für die erfindungsgemäße Stoßverbindung,
- Figur 4: eine Schrägansicht eines flachovalen Luftkanalabschnitts,
- Figur 5: einen mittigen, teilweise weggebrochenen Axialschnitt durch einen Luftkanalabschnitt gemäß Anspruch 3,
- Figur 6: einen durch Segmente mit Trapezquerschnitt gebildeten Bogen eines Luftkanals im Schnitt,
- Figur 7: einen konischen Luftkanalabschnitt im Schnitt, und
- Figuren 8 bis 12: verschiedene Ausführungsformen von an eine Kanalwand einstückig angeformten Verbindungsflanschen im Schnitt,
- Figur 13: eine Ausführungsform, die nicht zur Erfindung gehört.

In allen Figuren sind gleiche oder gleichartige Teile mit den gleichen Bezugszeichen versehen.

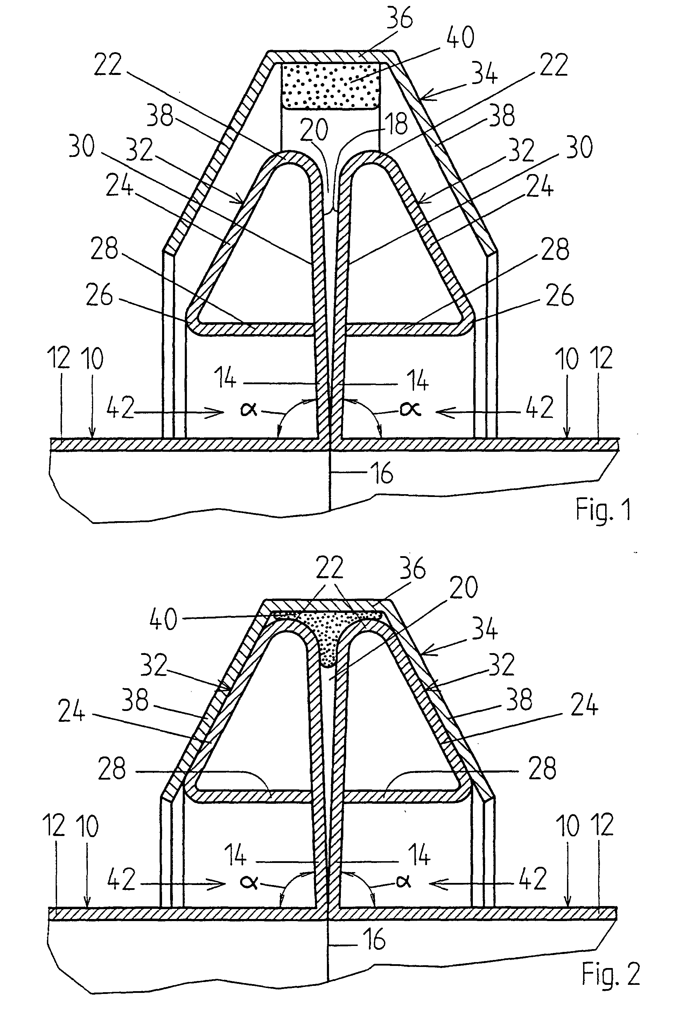

Wie aus den Figuren 1 und 2 deutlich zu sehen ist, weist die dargestellte Stoßverbindung zwei allgemein mit 10 bezeichnete Kanalabschnitte mit rohrförmiger, vorzugsweise kreisrunden Querschnitt besitzender Kanalwand 12 auf. An den aneinanderstoßenden Enden geht jede Kanalwand 12 soweit wie möglich scharfkantig in einen nach außen stehenden Ringbord 14 über, der mit der Kanalwand 12 jeweils einen Winkel a von 85° bis 89°, vorzugsweise 87° bis 89°, einschließt. Wenn daher die inneren Enden der Ringborde 14 im Bereich der Kanalwände 12 längs einer engen Trennfuge 16 dicht aneinanderliegen, so bildet sich zwischen den Stirnflächen 18 der beiden Ringborde 14 ein keilförmiger Spalt 20, der sich radial nach außen erweitert.

Das äußere Ende jedes Ringbordes 18 geht über eine Rundung 22 jeweils in einen nach rückwärts und innen zur zugehörigen Kanalwand 12 weisenden konisch geneigten Spannschenkel 24 über. Das innere, nahe der Kanalwand 12 liegende Ende jedes Spannschenkels 24 geht über eine Rundung 26 jeweils in einen im Abstand von der Kanalwand 12 parallel zu dieser zum Ringbord 14 hin verlaufenden Stützschenkel 28 über. Das freie Ende jedes Stützschenkels 28 liegt abstützend an der von der Trennfuge 16 bzw. dem keilförmigen Spalt 20 wegweisenden Seite 30 jedes Ringbords 14 an. Dadurch ergibt sich eine außerordentlich stabile Ausbildung des aus Ringbord 14, Spannschenkel 24 und Stützschenkel 28 gebildeten, einstückig mit der Kanalwand 12 verbundenen und allgemein mit 32 bezeichneten Verbindungsflansches.

Die aneinandergrenzenden Verbindungsflansche 32 werden durch Aufsetzen eines allgemein ringförmigen Spannrings 34 mit rinnenförmigem Querschnitt (Fig.1) und Festspannen des Spannrings 34 (Fig.2) gegeneinandergezogen und unter Spannung gesetzt, so daß die Kanalwände 12 noch fester längs der Fuge 16 axial gegeneinandergepreßt werden. Das Spannen des Spannrings kann in an sich bekannter, jedoch nicht dargestellter Weise durch Anziehen einer Mutter, welche auf einer gebogenen Schraube sitzt, die an einem Spannringende befestigt ist, erfolgen, wobei die gebogene Schraube durch eine am anderen Spannringende sitzende Hülse verläuft. So kann durch Festziehen einer einzigen Schraube die Verbindung sekundenschnell hergestellt werden. Den gleichen Zweck kann auch ein verstellbares Hebelschloß oder dergl. erfüllen. In Sonderfällen, in denen die Ansprüche an Dichtheit und Stabilität nicht so hoch sind, können statt eines Spannrings 34 auch mehrere übergreifende Schraubklammern oder dergl. als Spanneinrichtung zum Zusammenhalten der Stoßverbindung angewendet werden.

Der in den Figuren 1 und 2 dargestellte Spannring 34 weist einen Rinnenboden 36 sowie zwei konische Seitenschenkel 38 auf, deren Konizität der Konizität der Spannschenkel 24 entspricht und die sich daher beim Festziehen des Spannrings 34 preßend an die Spannschenkel 24 anlegen.

An der Innenseite des Rinnenbodens 36 ist bei der dargestellten Ausführungsform eine umlaufende streifenförmige elastische Dichtung 40 befestigt, die beim Festziehen des Spannrings 34 in die in Fig.2 gezeigte gespannte Lage auf die Außenseite der Rundungen 22 sowie in das äußere Ende des keilförmigen Spaltes 20 zwischen den Stirnflächen 18 der Ringborde 14 dichtend eingepreßt wird. Zusätzlich zu der durch die stark aneinandergepreßten inneren Enden der Ringborde 14 längs der Fuge 16 erzielten guten Abdichtung wird somit eine für praktisch alle vorkommenden Fälle ausreichende Abdichtung erreicht.

Zwischen den Stützschenkeln 28 und den Kanalwänden 12 wird zu den Ringborden 14 hin jeweils eine U-förmige Rinne 42 gebildet, die beispielsweise zum Aufsetzen und Eingreifen von als Spanneinrichtung dienenden Schraubklammern in den oben erwähnten Fällen oder auch für das Einsetzen von Klammern zur Aufhängung des Luftkanals verwendet werden können.

Durch das dichte Aneinanderstoßen der Enden der Kanalwände 12 bzw. der inneren Enden der Ringborde 14 und die möglichst scharfkantige Abwinkelung der Ringborde 14 bezüglich der Kanalwände 12 ergibt sich, wie erwähnt, eine sehr enge Stoßfuge 16, wodurch Störungen der Strömung verhindert werden und Schmutzablagerungen wirksam vorgebeugt wird. Zum Vergleich muß man berücksichtigen, daß bei bekannten Stoßverbindungen an dieser Stelle ein 2 bis 5 mm breiter Spalt zwischen den aneinandergrenzenden Kanalabschnitten entsteht, welcher teilweise durch eine poröse Dichtung ausgefüllt ist. Zusammen mit dem im Spalt sich ansammelnden Schmutz ergibt sich hier ein guter Nährboden für Bakterien und dergleichen.

Zur Erzielung einer guten Spannbarkeit der Verbindungsflansche 32 durch den Spannring 34 schließen die Spannschenkel 24 und somit auch die Seitenschenkel 38 mit den Ringborden 14 vorzugsweise einen Winkel von etwa 30° ein. Beim Spannen des Spannrings 34 werden gleichzeitig die Rundungen 22 der beiden Verbindungsflansche 32 durch die Rinnenboden 36 des Spannrings 34 radial ausgerichtet.

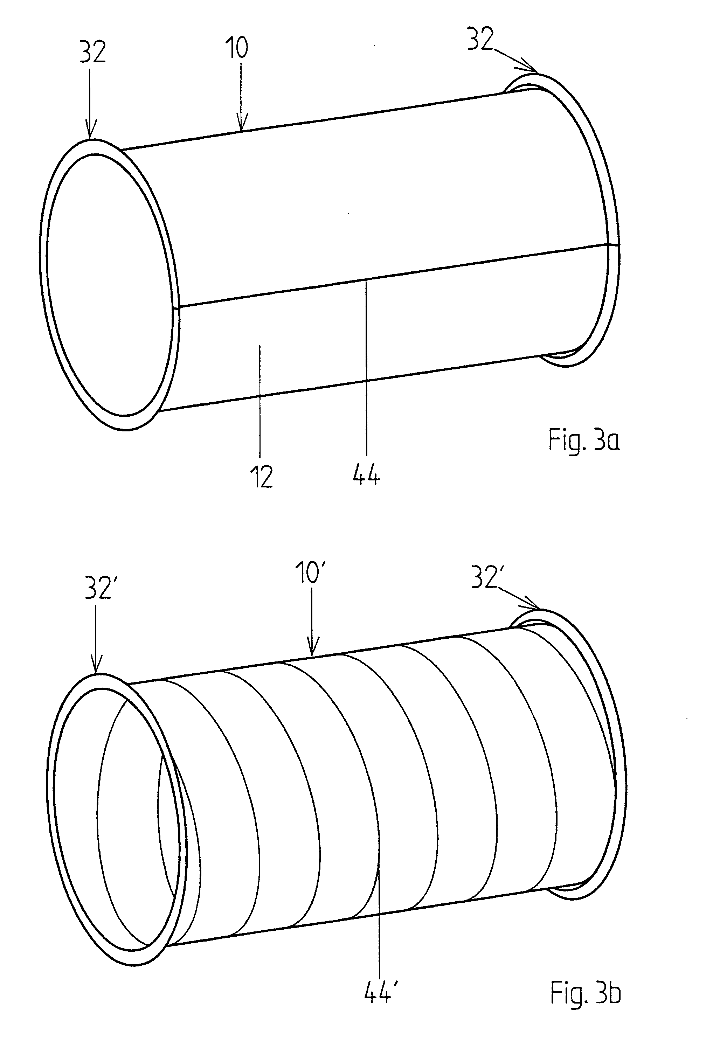

In Fig.3 ist ein für die erfindungsgemäße Stoßverbindung verwendbarer Kanalabschnitt 10 mit kreisrundem Querschnitt dargestellt, welcher an beiden Enden je einen Verbindungsflansch 32 gemäß den Figuren 1 und 2 aufweist. Damit auch in Längsrichtung des Luftkanalabschnitts an der Innenwand desselben weder im Bereich der Kanalwand 12 noch im Bereich der Verbindungsflansche 32 Rinnen, Falze oder sonstige vorstehende oder eingesenkte Abschnitte entstehen, ist der dargestellte Luftkanalabschnitt 10 mit einer Längsschweißnaht 44 versehen, die an der Innenfläche der Kanalwand 12 weitgehend glatt ist. Dadurch ist der Kanal auch für höchste Anforderungen geeignet.

Ein ähnlicher Kanalabschnitt 10' ist in Fig.3b dargestellt. Dieser Kanalabschnitt 10' ist anstatt mit einer Längsschweißnaht als Wickelfalzrohr mit schraubenförmig gewendeltem Falz 44' hergestellt. Für geringere Anforderungen können die feinen Rillen des Wickelfalzes 44' im Rohrinneren akzeptiert werden. Die Hauptproblemstellen, nämlich Vorsprung und Spalt zwischen Verbindungsflansch 32 und Kanalwand 12' sowie Spalt zwischen Ringbord 14 und Gegenringbord 14 sind auf jeden Fall beseitigt.

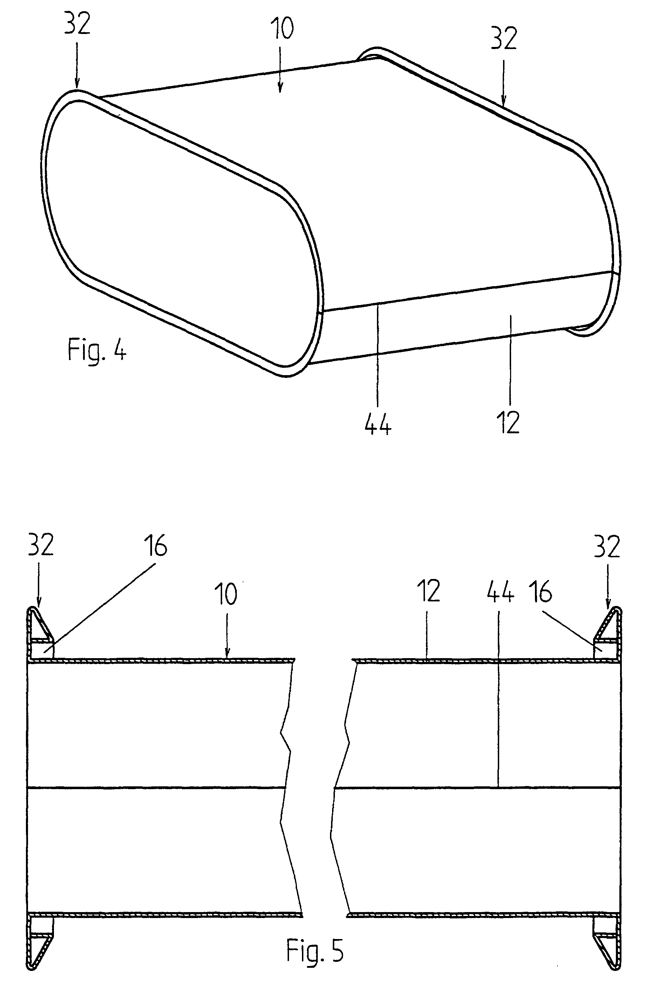

Ein gerader Kanalabschnitt 10, der jedoch einen flachovalen Querschnitt besitzt und ebenfalls eine Längsschweißnaht 44 aufweist, ist in Fig.4 dargestellt.

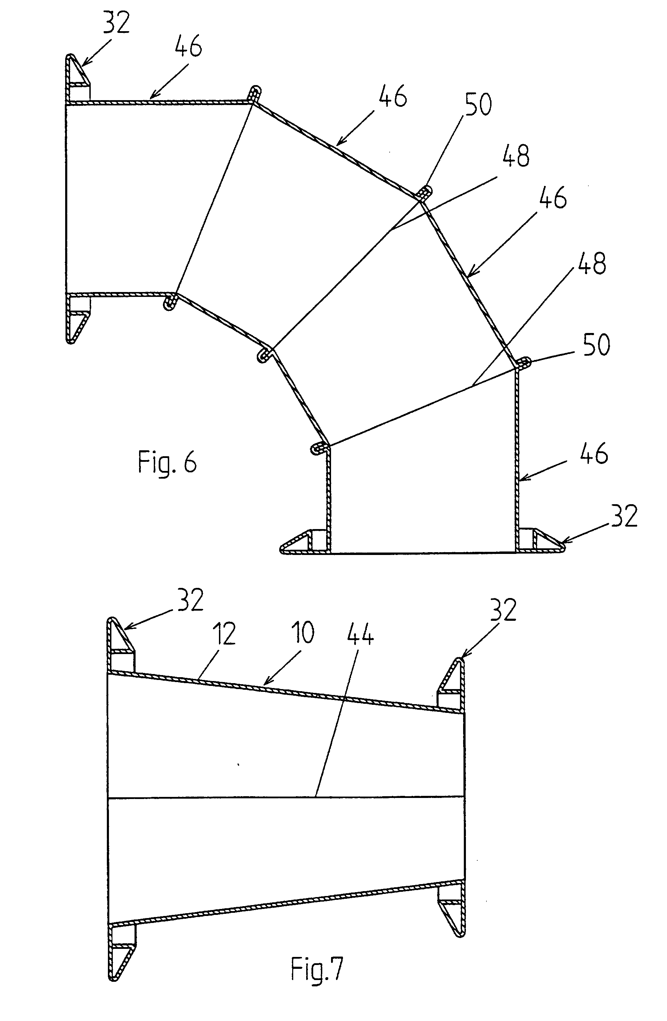

Der in Fig.3 gezeigte Luftkanalabschnitt 10 ist in Fig.5 im Axialschnitt gezeigt. Fig.6 zeigt einen aus mehreren Formstücken 46 mit jeweils trapezförmigem Längsquerschnitt zusammengefügten Bogen, der mittels Verbindungsflanschen 32 an seinen Enden an anschließende gerade Luftkanalabschnitte 10 angeschlossen werden kann, wie oben erläutert. Die einzelnen Formstücke 46 sind mittels mechanischer oder geschweißter und an der Innenseite längs dichter Trennfugen 48 möglichst glatt verbundener, nach außen stehender Falz 50 dicht aneinandergefügt.

Fig. 7 zeigt eine sich konisch verjüngende Ausführungsform eines Luftkanalabschnitts 10 mit Verbindungsflanschen 32 und Längsschweißnaht 44, wobei die Kanalwand 12 von einem Ende zum anderen sich konisch verjüngt.

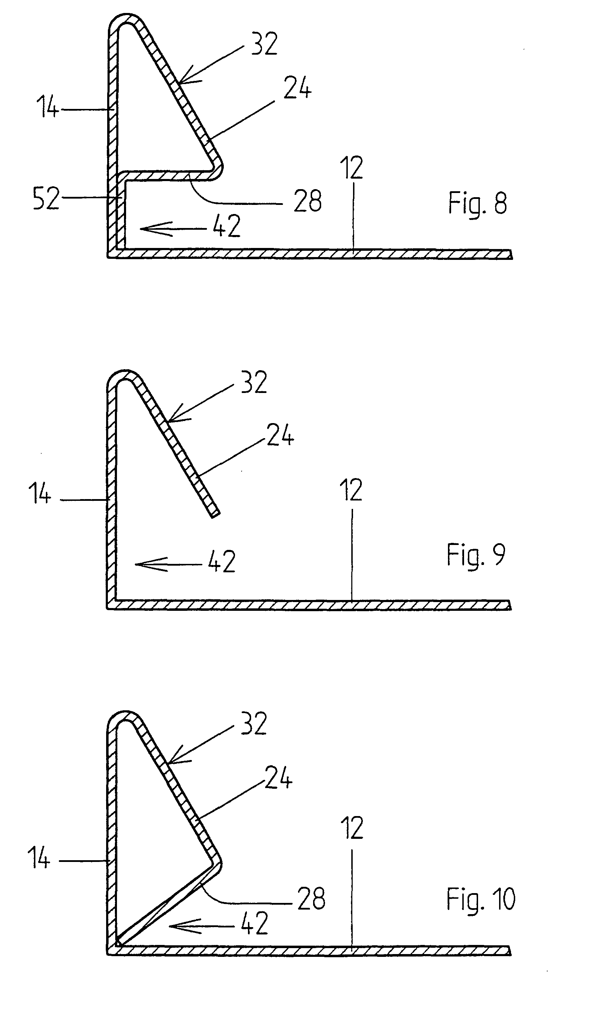

In den folgenden Figuren 8 bis 13 sind verschiedene Ausführungsformen eines am Ende der Kanalwand 12 einstückig angeformten Verbindungsflansches 32 im Axialschnitt dargestellt. Bei der Ausführungsform nach Fig.8 schließt sich an den ungefähr radial nach außen stehenden, jedoch mit der Kanalwand 12 den oben erwähnten geringfügig spitzen Winkel α einschließenden Ringbord 14, den damit verbundenen Spannschenkel 24 und den wiederum damit verbundenen, parallel zu und im Abstand von der Kanalwand 12 verlaufenden Stützschenkel 28 ein parallel zum Ringbord 24 verlaufender und an diesem anliegender weiterer Stützschenkel 52 an, dessen freies Ende an der Außenseite der Kanalwand 12 abgestützt ist. Dadurch ergibt sich eine außerordentlich stabile Form des Verbindungsflansches 32.

Eine relativ einfache und insofern billige Ausführungsform des Verbindungsflansches 32 ist in Fig. 9 dargestellt. Diese Ausführungsform weist außer dem Ringbord 14 und dem Spannschenkel 24 keinerlei Stützschenkel auf. Es ist für viele Fälle hinsichtlich der Stabilität des Verbindungsflansches 32 ausreichend.

Fig. 10 zeigt dagegen eine Ausführungsform mit einem Stützschenkel 28, der sich vom radial inneren Ende des Spannschenkels 24 schräg nach innen erstreckt und dessen freies Ende sich im Winkel zwischen dem Ringbord 14 und der Kanalwand 12 abstützt. Bei allen diesen Ausführungsformen des Verbindungsflansches 32 wird auch eine Rinne 42, allerdings jeweils mit unterschiedlichen Querschnitten, gebildet, die zu den oben erwähnten Zwecken ausgenützt werden kann.

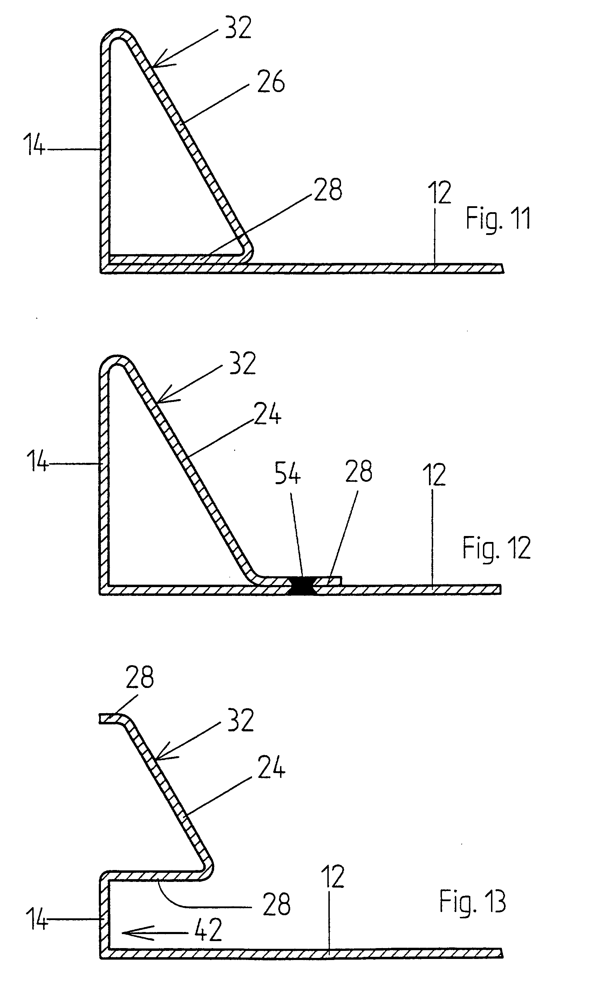

Bei der in Fig.11 gezeigten Ausführungsform verläuft der an den Spannschenkel 26 anschließende Stützschenkel 28 ebenfalls parallel zur Kanalwand 12 und stützt sich mit seinem freien Ende am Ringbord 14 ab. Bei dieser Ausführungsform ist jedoch keine Rinne 42 zwischen Stützschenkel 28 und Kanalwand 12 vorgesehen, sondern der Stützschenkel 28 liegt unmittelbar und abstützend an der Kanalwand 12 an.

Eine ähnliche Ausführungsform, jedoch mit vom Ringbord 14 wegweisendem Stützschenkel 28, der ebenfalls an der Außenseite der Kanalwand 12 anliegt, ist in Fig.12 dargestellt. Bei dieser Ausführungsform ist es zur besseren Abstützung zweckmäßig, zwischen Kanalwand 12 und Stützschenkel 28 eine Punktschweißung 54 vorzusehen.

Eine ebenfalls verhältnismäßig einfach herzustellende und daher weniger stabile Ausführungsform, die nicht zur Erfindung gehört, ist in Fig.13 dargestellt. Der Ringbord 14 führt dabei nicht über die gesamte radiale Ausdehnung des Verbindungsflansches 32 nach außen, sondern biegt in einen parallel zur Kanalwand 12 verlaufenden Stützschenkel 28 ab, der wiederum in den konischen Spannschenkel 24 übergeht. Am radial äußeren Ende des Spannschenkels 24 ist ein zweiter, parallel zur Kanalwand 12 verlaufender Stützschenkel 28 vorgesehen, der in einer damit gebildeten Stoßverbindung mit einem weiteren Kanalabschnitt dieser Art an einem gleichartigen, jedoch entgegengesetzt gerichteten Stützschenkel 28 des anschließenden Kanalabschnitts zur Anlage kommt.

## Patentansprüche

1. Stoßverbindung zwischen zwei Luftkanalabschnitten aus Blech mit einer kreisrunden oder flachovalen Querschnitt besitzenden Kanalwand (12,12'), wobei die Kanalabschnitte an wenigstens einem Ende einen Verbindungsflansch (32) zur Herstellung der Stoßverbindung mit einem anschließenden Luftkanalabschnitt aufweisen, wenigstens ein von der Kanalwand (12,12') einstückig mit dieser nach außen abstehender Ringbord vorgesehen ist, die Verbindungsflansche (32) einen vom äußeren Ende derselben konisch zur angrenzenden Kanalwand (12,12') zurückweisenden Spannschenkel (24) aufweisen und durch einen auf dieselben aufgesetzten, mit konischen Seitenschenkeln (38) an den Spannschenkeln (24) der Verbindungsflansche (32) anliegenden Spannring (34) zusammengehalten sind, **dadurch gekennzeichnet, daß** jeder Verbindungsflansch (32) mit der angrenzenden Kanalwand (12,12') einstückig ausgebildet ist und daß der einen einstückigen Teil des Verbindungsflansches (32) bildende Ringbord (14) mit der angrenzenden Kanalwand (12,12') im unbelasteten Zustand einen Winkel (α) von ≤90°, vorzugsweise 80° bis 90°, einschließt und an seinem radial inneren Ende scharf abgewinkelt in die Kanalwand (12,12') übergeht.

2. Stoßverbindung nach Anspruch 1, **dadurch gekennzeichnet, daß** der Ringbord (14) im unbelasteten Zustand mit der Kanalwand (12,12') jeweils einen Winkel von 87° bis 89° einschließt.

3. Stoßverbindung nach Anspruch 1 oder 2, **dadurch gekennzeichnet, daß** der Spannschenkel (24) jeweils an seinem radial inneren Ende in einen sich am Ringbord (14) und/oder der Kanalwand (12,12') abstützenden Stützschenkel (28) übergeht.

4. Stoßverbindung nach einem der vorangehenden Ansprüche, **dadurch gekennzeichnet, daß** die Kanalwand (12) jeweils eine innen glatte Längsschweißnaht (44) aufweist.

5. Stoßverbindung nach einem der Ansprüche 1 bis 3, **dadurch gekennzeichnet, daß** die Kanalwand (12,12') einen schraubenförmig gewendelten Falz (44') aufweist.

6. Stoßverbindung nach einem der vorangehenden Ansprüche, **dadurch gekennzeichnet, daß** an der Innenseite des Spannrings (34) eine in das radial äußere Ende des keilförmigen Spaltes (20) zwischen den Ringborden (14) gepreßte elastische Dichtung (40) angebracht ist.

## Claims

1. A butt joint between two air duct sections made from sheet metal with a duct wall (12, 12') having a circular or flat oval cross section, wherein the duct sections comprise at one end at least a connection flange (32) for producing the butt joint with an adjoining air duct section, at least one annular edge outwardly projecting from the duct wall (12, 12') in one piece therewith is provided, the connection flanges (32) comprise a clamping leg (24) which points back from the outer end of said flanges conically to the adjacent duct wall (12, 12') and are held together by a clamping ring (34) which is placed on said flanges and with conical side legs (38) abuts the clamping legs (24) of the connection flanges (32),
**characterised in that** each connection flange (32) is constructed in one piece with the adjacent duct wall (12, 12')
**and in that** the annular edge (14), forming a single-piece part of the connection flange (32), with the adjacent duct wall (12, 12') encloses an angle (α) of ≤ 90°, preferably 80° to 90°, in the unloaded state and at its radially inner end passes at an acute angle into the duct wall (12, 12').

2. A butt joint according to Claim 1,
**characterised in that** in the unloaded state the annular edge (14) in each case encloses an angle of 87° to 89° with the duct wall (12, 12').

3. A butt joint according to Claim 1 or 2,
**characterised in that** at its radially inner end the clamping leg (24) in each case passes into a supporting leg (28) supported on the annular edge (14) and/or the duct wall (12, 12').

4. A butt joint according to one of the preceding Claims,
**characterised in that** the duct wall (12) in each case has an internally smooth straight weld (44).

5. A butt joint according to one of Claims 1 to 3,
**characterised in that** the duct wall (12, 12') comprises a spirally coiled lock seam (44').

6. A butt joint according to one of the preceding Claims,
**characterised in that** an elastic seal (40) pressed into the radially outer end of the wedge-shaped gap (20) between the annular edges (14) is mounted on the inner side of the clamping ring (34).

## Revendications

1. Joint droit entre deux segments de conduite d'air en tôle ayant une paroi de conduite (12, 12') à section circulaire ou ovale plate, les segments de conduite ayant à au moins une extrémité une bride de liaison (32) pour réaliser le joint droit avec un segment de conduite d'air adjacent, au moins un bord annulaire faisant corps avec la paroi de conduite (12, 12') et venant en saillie vers l'extérieur, la bride annulaire (32) ayant une branche de serrage (24) dirigée en arrière à partir de l'extrémité extérieure de la bride de liaison, suivant une forme conique vers la paroi de conduite (12, 12') adjacente, et la réunion se fait par un collier de serrage (34), installé sur les branches de serrage, ce collier ayant des branches latérales (38) coniques s'appuyant contre les branches de serrage (24) des brides de liaison (32),
**caractérisé en ce que**
chaque bride de liaison (32) est réalisée en une seule pièce avec la paroi adjacente de conduite (12, 12'), et
le bord annulaire (14) qui fait corps et constitue la bride annulaire (32), fait avec la paroi de conduite (12, 12') adjacente, à l'état non sollicité, un angle (α) ≤ à 90° et de préférence compris entre 80° et 90° et à son extrémité intérieure, radiale, ce bord annulaire est plié de manière accentuée à la jonction avec la paroi de conduite (12, 12').

2. Joint droit selon la revendication 1,
**caractérisé en ce que**
le bord annulaire (14), à l'état non sollicité, fait avec la paroi de conduite (12, 12') un angle compris entre 87° et 89°.

3. Joint droit selon les revendications 1 ou 2,
**caractérisé en ce que**
la branche de serrage (24) rejoint chaque fois à son extrémité radiale intérieure, une branche d'appui (28) qui s'appuie contre le bord annulaire (14) et/ou la paroi de conduite (12, 12').

4. Joint droit selon l'une des revendications précédentes,
**caractérisé en ce que**
la paroi de conduite (12) présente un cordon de soudure longitudinal (44) lisse à l'intérieur.

5. Joint droit selon l'une quelconque des revendications 1 à 3,
**caractérisé en ce que**
la paroi de conduite (12, 12') présente une agrafe (44') en hélice.

6. Joint droit selon l'une des revendications précédentes,
**caractérisé en ce que**
le côté intérieur du collier (34) comporte un joint élastique (40) pressé dans l'extrémité radiale extérieure de l'intervalle de section conique (20) entre les bords annulaires (14).
